# EUROPEAN PATENT APPLICATION

(11) **EP 1 755 205 A1**
(43) Date of publication of application: **21.02.2007**
(21) Application number: 05743687.5
(22) Date of filing: 25.05.2005
(51) Int. Cl.: H02K 7/02, E02F 9/12, F16D 55/32

(54) **VERTICAL ELECTRICALLY DRIVING DEVICE WITH BRAKE AND WORK MACHINE**

(30) Priority: 07.06.2004 JP 2004168006; 13.07.2004 JP 2004205593
(71) Applicant: KOBELCO CONSTRUCTION MACHINERY CO., LTD., Hiroshima-shi, Hiroshima 731-0138 (JP)
(72) Inventor: YOSHIMATSU, H., Kobe Corporate Res. Labs., Nishi-ku, Kobe-shi, Hyogo 6512271 (JP); TAMURA, K., KOBELCO CONSTRCN. MACHINERY CO. LTD., Hiroshima-shi, Hiroshima 7310138 (JP)
(74) Representative: TBK-Patent
(86) International application number: PCT/JP2005/009518
(87) International publication number: WO 2005/122363

(57) **Abstract**

A brake unit 13 of a rotating drive apparatus 10 includes a piston 133 arranged around a vertically extending rotation shaft body 121 in a non-contact state actionably in the vertical direction, a fixed plate 135 arranged below the piston 133, and a frictional plate 134 arranged between the piston 133 and the fixed plate 135 rotatably together with the rotation shaft body 121 as well as slidably along the rotation shaft body 121. The brake unit 13 generates a brake torque by downwardly actuating the piston 133 so as to press the friction plate 134 onto the fixed plate 135 with the piston 133, and the brake unit 13 cancels the braking by upwardly actuating the piston 133. The brake unit 13 also includes coil springs 138 raising the frictional plate 134, during canceling the braking, to a position between the piston 133 and the fixed plate 135 in a non-contact state with either of them.

## Description

### Technical Field

The present invention relates to a vertical electrically driving device with a brake and a working machine.

### Background Art

Recently, in view of energy saving, working machines, such as a hybrid excavator, have been developed in which a motor is driven by electric power generated from an engine-driven generator mounted thereon. Since a rotating drive apparatus for a hybrid excavator is mounted in a narrow space, it is preferable that this apparatus be made as simple and compact as possible.

In a disk brake assembled in a vertical electrically driving device as a drive source of the rotating drive apparatus, an actuation member separated from a rotation member is arranged above a fixed member in a state in that a friction member, which is attached along a vertical shaft of a casing rotatably about the vertical shaft together with the rotation member as well as slidably along the vertical shaft, is interposed between the actuation member and the fixed member, so that a brake torque is generated by lowering the actuation member so as to press the friction member to the fixed member with the actuation member.

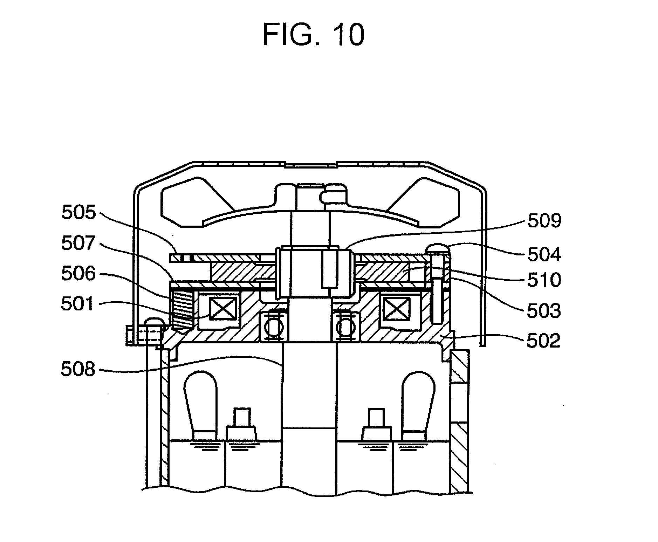

Such a structure may be principally the same as that of general vertical electric motors and known horizontal multiple disk brakes (see Patent Document 1, for example). That is, the brake of a general vertical electric motor, as shown in Fig. 10, includes a fixed iron core 502 having a magnet coil 501 embedded therein, a fixed plate 505 fixed with bolts 504 above the fixed iron core 502 with a spacer 503 therebetween, a movable iron core 507 arranged directly above the fixed iron core 502 and upward urged elastically with coil springs 506, and a brake disk 510 arranged between the fixed plate 505 and the movable iron core 507 and vertically slidably fitted to a spline portion 509 of a motor shaft 508. Alternatively, the brake may be arranged upside down.

In Fig. 10, the magnet coil 501 is not excited and the movable iron core 507 is pushed up by an elastic restoration force of the coil spring 506, so that the brake disk 510 is clamped and pressurized in between the movable iron core 507 and the fixed plate 505 so as to generate a brake torque. When the magnet coil 501 is excited, the movable iron core 507 is attracted (lowered) to the fixed iron core 502 against the elastic restoration force of the coil spring 506, so that the pressurized state of the brake disk 510 is released and the brake is cancelled.

In a horizontal multiple disk brake, a multiple disk composed of drive plates and driven plates is pressurized with a piston so as to bring the plates in contact with each other and generate a brake torque.

However, in the general vertical electric motor described above, during cancellation of the brake, although the movable iron core 507 is lowered by exciting the magnet coil 501, the brake disk 510 is also lowered by gravity, so that the brake disk 510 comes in contact with the movable iron core 507 (with the fixed plate 505 when arranged upside down) and a problem that energy loss may increase due to a frictional resistance has been arisen.

Such a problem may arise when the horizontal multiple disk brake disclosed in Patent Document 1 is vertically arranged as it is and also in the case of the conventional rotating drive apparatus for hybrid excavators. In the horizontal multiple disk brake, for example, when the drive plate is not pushed to the driven plate by canceling the brake, the rotating drive plate is naturally separated from the driven plate; however, when vertically arranged, the drive plate may come in contact with the driven plate due to the gravity, generating a frictional resistance. When lubricant liquid is used, the frictional resistance is not excessive even in the vertical state; however, the thickness of the lubricant liquid is reduced so that a shear resistance is increased, also increasing energy loss. Thereby, it is difficult to achieve the energy saving of the hybrid excavator.

It is an object of the present invention to provide a vertical electrically driving device with a brake and a working machine capable of saving energy by suppressing a frictional resistance during brake canceling even they are simple and compact in structure.
Patent Document 1: Japanese Patent Publication No. 2833238

### Disclosure of Invention

A vertical electrically driving device with a brake according to the present invention includes a motor unit including a motor shaft extending in a vertical direction; a brake unit including a fixed member arranged around a rotation shaft, which extends in the vertical direction in drivingly associated with the motor shaft, in a non-contact state with the rotation shaft, an actuation member actionable in the vertical direction, and a friction member arranged between the actuation member and the fixed member rotatably together with the rotation shaft as well as slidably along the rotation shaft, the brake unit generating a brake torque by moving the actuation member toward the fixed member so as to press the friction member with the actuation member and the fixed member, and the brake unit canceling the braking by moving the actuation member in a direction opposite to the fixed member; and a speed reduction unit including an input shaft extending in the vertical direction in drivingly associated with the motor shaft for reducing the rotational speed of the input shaft so as to output its rotational torque, and the brake unit includes friction member supporting means for supporting the friction member during canceling the braking at a position between the actuation member and the fixed member in a non-contact state with either of the actuation member and the fixed member.

In a working machine including an upper rotating body mounted rotatably about a vertical axis on a lower traveling body, the working machine according to the present invention includes the vertical electrically driving device with a brake according to the present invention as a drive source of a rotating drive apparatus for rotating the upper rotating body.

### Brief Description of the Drawings

Fig. 1 is an entire structural drawing of a hybrid excavator according to an embodiment of the present invention.
Fig. 2 is an entire structural drawing of a rotating drive apparatus of the hybrid excavator according to the embodiment of the present invention.
Fig. 3 is a longitudinal sectional view of a brake unit of the rotating drive apparatus shown in Fig. 2.
Fig. 4 is a plan view of the vicinity of a frictional plate shown in Fig. 3.
Fig. 5 is an explanatory view of the operation of the brake unit; Fig. 5(a) shows a state during the brake is actuated and Fig. 5(b) shows a state during the brake is canceled.
Fig. 6 is a drawing showing a brake configuration according to a modification 1 of the present invention.
Fig. 7 is a drawing showing a brake configuration according to a modification 2 of the present invention; Fig. 7(a) is a partial plan view of a fixed plate and Fig. 7(b) is a sectional view thereof.
Fig. 8 is a drawing showing a brake configuration according to a modification 3 of the present invention.
Fig. 9 is an entire structural drawing of a rotating drive apparatus of the hybrid excavator according to a modification 4 of the present invention.
Fig. 10 is a longitudinal sectional view showing a brake portion of a general vertical electric motor.

### Best Mode for Carrying Out the Invention

A vertical electrically driving device with a brake according to the present invention includes a motor unit including a motor shaft extending in a vertical direction; a brake unit including a fixed member arranged around a rotation shaft, which extends in the vertical direction in drivingly associated with the motor shaft, in a non-contact state with the rotation shaft, an actuation member actionable in the vertical direction, and a friction member arranged between the actuation member and the fixed member rotatably together with the rotation shaft as well as slidably along the rotation shaft, the brake unit generating a brake torque by moving the actuation member toward the fixed member so as to press the friction member with the actuation member and the fixed member, and the brake unit canceling the braking by moving the actuation member in a direction opposite to the fixed member; and a speed reduction unit including an input shaft extending in the vertical direction in drivingly associated with the motor shaft for reducing the rotational speed of the input shaft so as to output its rotational torque, and the brake unit includes friction member supporting means for supporting the friction member during canceling the braking at a position between the actuation member and the fixed member in a non-contact state with either of the actuation member and the fixed member.

By this configuration, during canceling the braking, the friction member is supported at a position between the actuation member and the fixed member in a non-contact state with either of them, so that the frictional resistance cannot be generated with regard to the actuation member and the fixed member. Since distances of the friction member to the fixed member and the actuation member are increased, when lubricant liquid is used, the shear resistance is reduced, so that the energy loss is reduced, contributing to the energy saving.

Furthermore, the motor shaft of the motor unit, the rotation shaft of the brake unit, and the input shaft of the speed reduction unit may preferably be coaxially connected together. In this case, the motor unit, the brake unit, and the speed reduction unit are arranged in series, so that the projection in the radial direction is eliminated, simplifying the structure to the utmost.

Moreover, the device may preferably further include a power divider arranged between the motor unit and the speed reduction unit for dividing the power of the motor unit into that of the speed reduction unit and that of the brake unit, and the rotation shaft of the brake unit is connected to the motor shaft of the motor unit via the power divider. In this case, the brake unit is arranged at a position separated from the motor unit and the speed reduction unit, so that the dimension in the vertical direction is reduced and this arrangement is suitable for a case having a space limit in the vertical direction.

Furthermore, preferably, the brake unit cancels the braking by raising the actuation member disposed above the fixed member, and the friction member supporting means raises the friction member so as to support it, when the actuation member is raised during canceling the braking, at a position between the actuation member and the fixed member in a non-contact state with either of them. In this case, the frictional resistance cannot be generated with regard to the actuation member and the fixed member. Since distances of the friction member to the fixed member and the actuation member are increased, when lubricant liquid is used, the shear resistance is reduced, so that the energy loss is reduced, contributing to the energy saving.

Moreover, the friction member supporting means may preferably be a spring member mounted to the rotation shaft. In this case, the structure is simplified and the stable performance of the spring member can be secured.

Furthermore, the rotation shaft may preferably be provided with a guide groove formed on the external periphery for guiding the spring member. In this case, the more stable performance of the spring member can be reserved against the centrifugal force (further the liquid resistance in the lubricant liquid).

Moreover, the friction member supporting means may preferably include a cap arranged slidably in the guide groove, and the spring member may be covered with the cap. In this case, the further more stable performance of the spring member can be reserved.

Moreover, the friction member supporting means may preferably be a spring member mounted to the fixed member. In this case, the structure is also simplified.

Moreover, the brake unit may preferably include an upper stopper member attached to the rotation shaft for restricting the upward displacement of the friction member. In this case, the energy saving can be maximized by displacing the friction member to a desired position.

Moreover, preferably, the brake unit cancels the braking by lowering the actuation member disposed below the fixed member, and includes stopper means for supporting the friction member, which descends by gravity when the actuation member is lowered during canceling the braking, at a position between the actuation member and the fixed member in a non-contact state with either of them. In this case, since during canceling the braking, the friction member descended by gravity is supported at a position between the actuation member and the fixed member in a non-contact state with either of them, the frictional resistance cannot be generated with regard to them. Since distances of the friction member to the fixed member and the actuation member are increased, when lubricant liquid is used, the shear resistance is reduced, so that the energy loss is reduced, contributing to the energy saving.

In a working machine including an upper rotating body mounted rotatably about a vertical axis on a lower traveling body, the working machine according to the present invention includes the vertical electrically driving device with a brake according to the present invention as a drive source of a rotating drive apparatus for rotating the upper rotating body.

By this configuration, the working machine can have the effect described in the vertical electrically driving device with a brake according to the present invention.

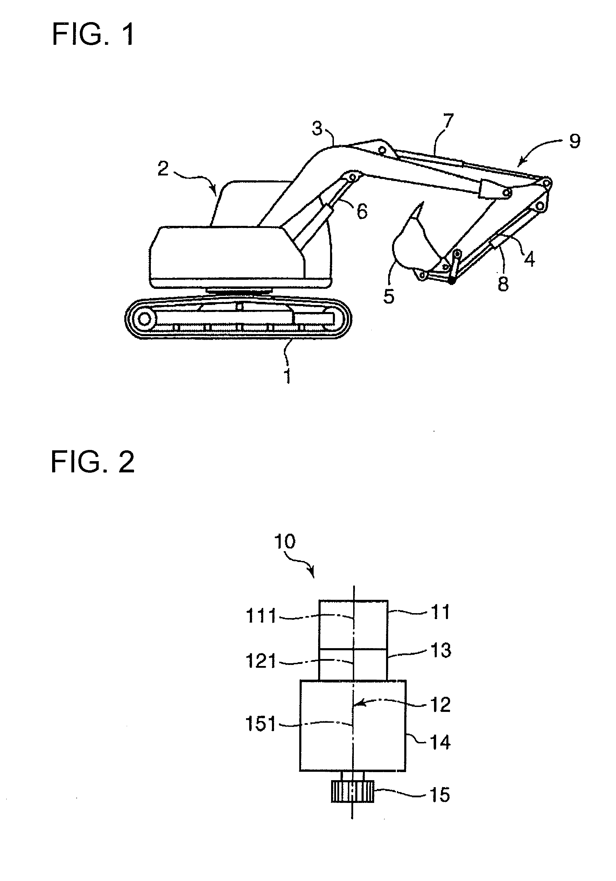

Fig. 1 is an entire structural drawing of a hybrid excavator according to an embodiment of the present invention; and Fig. 2 is an entire structural drawing of a rotating drive apparatus thereof. A hybrid excavator will be described below as an example of a working machine.

As shown in Fig. 1, in the hybrid excavator, on a crawler lower traveling body 1, an upper rotating body 2 is mounted rotatably about a vertical axis, and on the upper rotating body 2, a working apparatus 9 is mounted, which is composed of a boom 3, an arm 4, a bucket 5, and boom, arm, bucket cylinders 6, 7, and 8 for respectively driving these components.

On the upper rotating body 2, there is provided a rotating drive apparatus 10 shown in Fig. 2 and having a vertical electrically driving device with a brake as a drive source, in which a rotation member 12 (including a motor shaft 111, a rotation shaft member 121, and an input shaft 151, which will be described later) driven by a motor unit 11 extends downwardly via a brake unit 13 and a speed reduction unit 14. At an end of the rotation member 12, a pinion 15 is fixed for meshing with an internal gear of an inner race of a rotation bearing (not shown) so as to rotate the upper rotating body 2 by the rotation of the pinion 15.

The reason why the brake unit 13 is provided between the motor unit 11 and the speed reduction unit 14 is that the torque of the motor shaft 111 is the minimum among drive system components of the rotating drive apparatus 10. In such a manner, the torque of the brake unit 13 itself can be reduced.

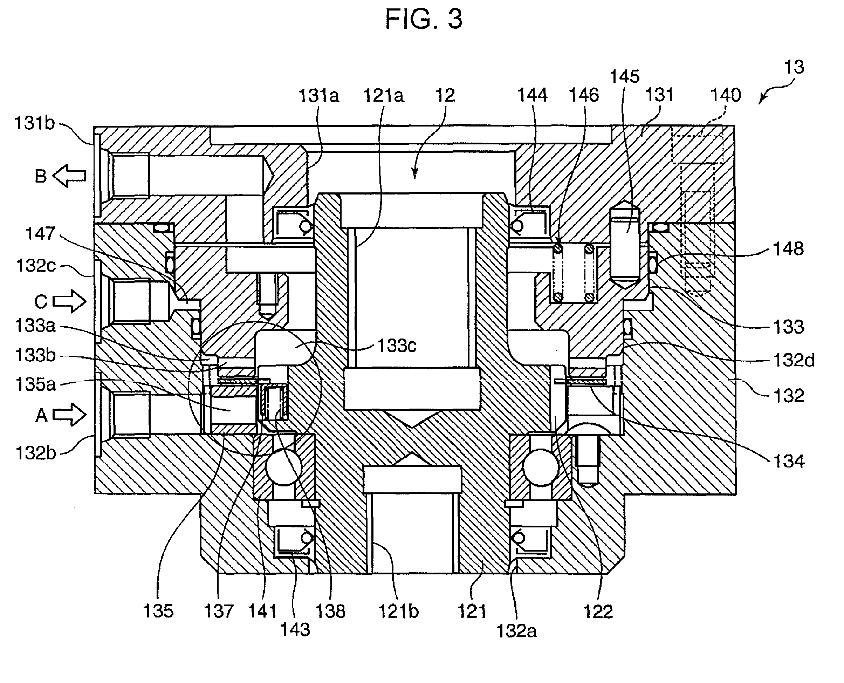

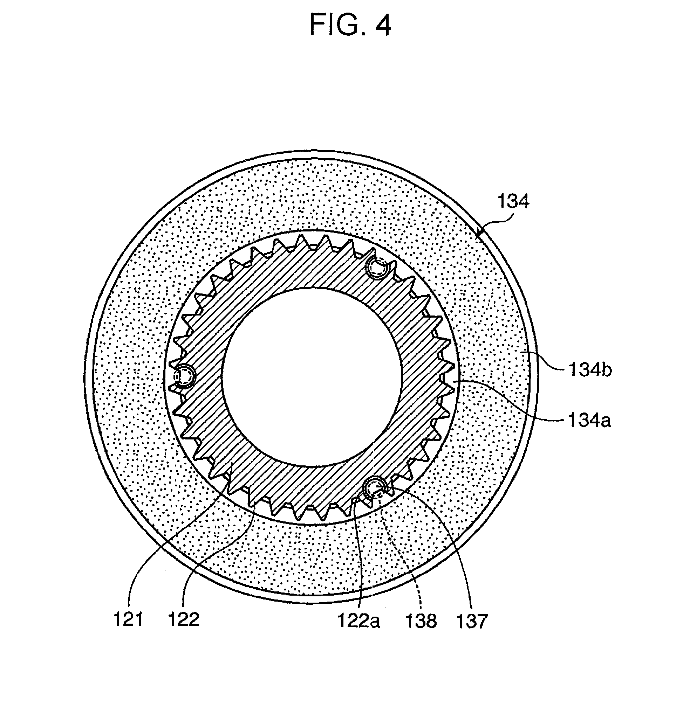

Fig. 3 is a longitudinal sectional view of the brake unit 13 of the rotating drive apparatus 10 shown in Fig. 2; and Fig. 4 is a plan view of the vicinity of a frictional plate of the brake unit 13.

Referring to Fig. 3, reference numeral 121 denotes a rotation shaft body that is part of the rotation member 12 (corresponding to a rotation shaft of the brake unit 13); numeral 122 a spline formed at an intermediate position of the rotation shaft body 121 in a longitudinal direction; numeral 131 an upper casing of the brake unit 13; numeral 132 a lower casing; numeral 133 a piston as an actuation member; numeral 134 a frictional plate as a friction member; and numeral 135 a fixed plate as a fixed member.

On internal surfaces of recesses respectively provided at both the upper and lower ends of the rotation shaft body 121 among these components, splines 121a and 121b are formed, respectively. The motor shaft 111 extending from the motor unit 11 is meshed with the spline 121a while the input shaft 151 of the speed reduction unit 14 is meshed with the spline 121b so as to constitute the substantially entire of the rotation member 12. As for an output shaft having the pinion 15 fixed thereto, in the case that the speed reduction unit 14 is composed of a planetary gear reducer, the entire of the rotation member 12 is coaxially arranged as shown Fig. 2; however, in the case that the speed reduction unit 14 is composed of a spur gear reducer, the output shaft is not coaxially arranged.

The upper casing 131 shaped in a thick disk includes a through hole 131a formed at its center for being penetrated by the rotation member 12 and an oil path 131b formed in the vicinity of the through hole 131a. The lower casing 132 shaped in a blind cylinder also includes a through hole 132a formed at its bottom center for being penetrated by the rotation member 12 and an oil paths 132b and 132c formed in the vicinity of the through hole 132a.

The upper and lower casings 131 and 132 are integrated by fixing them with a plurality of bolts 140 so as to rotatably journal the rotation shaft body 121 in the integrated state. Thereby, below the spline 122, a bearing 141 and a lower seal 143 are attached in that order while on the upper end side of the rotation shaft body 121, an upper seal 144 is attached so as to oil proof the upper and lower casings 131 and 132.

Also, around the rotation shaft body 121, the piston 133 is attached actionably in the vertical direction as well as not rotatably. Thereby, the piston 133 is shaped to correspond to the shape of a fitting hole 132d step-wise formed in a cross-sectional view. On the upper outer peripheral side of the piston 133, a vertical pin 145 is inserted for stopping the rotation of the upper casing 131 and on the inner peripheral side of the vertical pin 145, a coil spring 146 is interposed in a compressed state.

A pressure chamber 147 communicating with the oil path 132c is formed between the piston 133 and the lower casing 132. When hydraulic oil flows into the pressure chamber 147 via the oil path 132c in arrow C direction of the drawing, the piston 133 is raised against an elastic urging force of the coil spring 146. On the other hand, when the hydraulic oil flows out of the pressure chamber 147 via the oil path 132c in an opposite direction to arrow C direction, the piston 133 is pushed down by the elastic urging force of the coil spring 146, so that so-called negative actuation is carried out.

A through hole 133b is formed in a lower portion of the piston 133 as an oil path for lubricant oil so as to communicate with oil paths 133a and 133c arranged on both sides of the through hole 133b, respectively. In order to prevent the hydraulic oil from leaking to the lubricant oil side, a sealing O-ring 148 is interposed at an appropriate position between the piston 133 and the lower casing 132.

The frictional plate 134, as shown in Fig. 4, is shaped in a thin circular ring having an internal gear 134a formed to correspond to the spline 122. Materials resistant to wear 134b, such as ceramics and paper, are bonded on top and bottom surfaces of the frictional plate 134. By loosely fitting the internal gear 134a to the spline 122, the frictional plate 134 becomes slidable in the vertical direction, which is the axial direction of the rotation shaft body 121, as well as rotatable together with the rotation shaft body 121.

The internal gear 134a of the frictional plate 134 is provided with spring collars 137 (corresponding to caps) formed along its periphery at equal intervals, at three positions, for example. Coil springs 138 (corresponding to spring members and friction member supporting means), which are covered from their tops with the spring collars 137, respectively, can abut the spring collars 137 from the lower side. The coil springs 138 are supported on spring seats 122a (corresponding to guide grooves), respectively, which are bored in a blind rough cylinder at positions corresponding to the above three positions in the vicinity of the outer periphery of the spline 122.

The reasons why the coil springs 138 are mounted within the spring collars 137 are that even if the coil springs 138 rotate in the lubricant oil by the rotation of the rotation shaft body 121, the postures of the coil springs 138 are stabilized as long as they are within the spring collars 137 and that the stabilized operation of the coil springs 138 can be maintained against the centrifugal force and the fluid resistance during the rotation because, moreover, the spring collars 137 are also fitted into the spring seats 122a.

The fixed plate 135 is fixed on the inner wall of the fitting hole 132d of the lower casing 132 in a state that the fixed plate 135 is slightly separated from the end of the spline 122 and is located at a position opposing the bottom surface of the piston 133 via the frictional plate 134. The fixed plate 135 is provided with a horizontal oil path 135a communicating with the oil path 132b and formed at a position slightly separated also from the inner wall of the lower casing 132.

Hence, when lubricant oil flows in arrow A direction of Fig. 3 after passing through the oil path 132b, the lubricant oil is divided into two; one flows through the oil path 133a formed between the piston 133 and the lower casing 132, and further through between the bottom of the piston 133 and the frictional plate 134, between the frictional plate 134 and the fixed plate 135, and the through hole 133b; and the other flows through the oil path 135a and through between the fixed plate 135 and the spline 122. These flows, after converging together at the oil path 133c, flow out in arrow B direction of Fig. 3 via the oil path 131b so as to constitute a so-called wet disk brake.

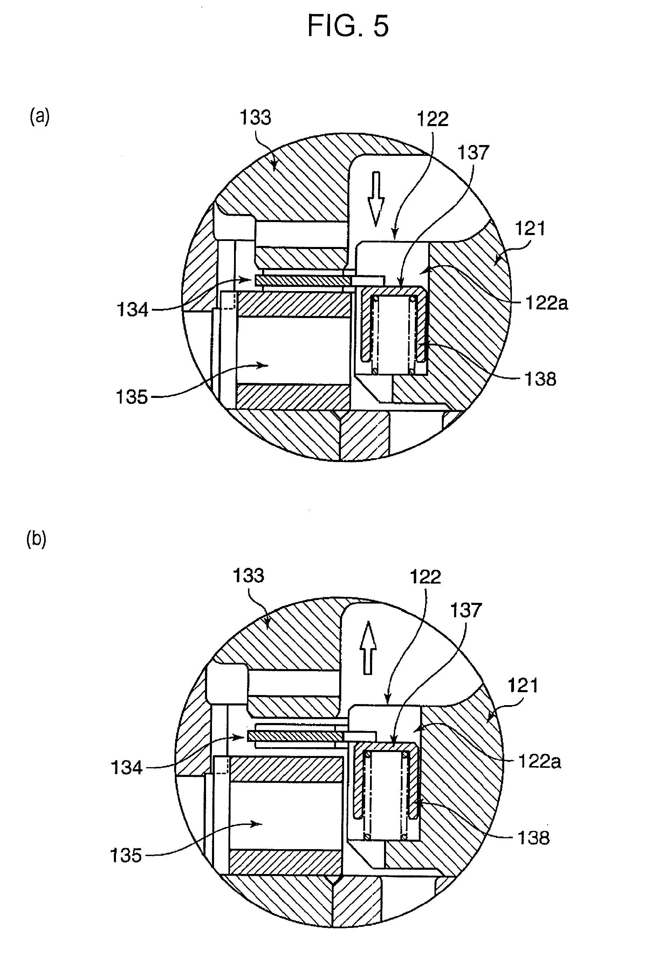

Fig. 5 is an enlarged view of a portion surrounded with a circle of Fig. 3; Fig. 5(a) shows a state during the brake is actuated and Fig. 5(b) shows a state during the brake is canceled. The operation of the brake will be described below with reference to Figs. 3 and 5.

The initial state is defined as that when the brake unit 13 is not actuated. At this time, referring to Fig. 3, a predetermined oil pressure is applied to the pressure chamber 147 by the hydraulic oil flowing-in from arrow c direction of Fig. 3 via the oil path 132c, so that the piston 133 is raised against the elastic urging force of the coil spring 146.

Then, when the brake unit 13 is actuated, the hydraulic oil within the pressure chamber 147 returns in a direction opposite to the arrow c direction via the oil path 132c, so that the piston 133 is lowered by the elastic urging force of the coil spring 146. Thus, as shown in Fig. 5(a), the bottom of the piston 133 pushes the frictional plate 134 onto the fixed plate 135, so that the rotation of the frictional plate 134 is stopped by the pushing force. Since the internal gear 134a of the frictional plate 134 is meshed with the spline 122 of the rotation shaft body 121, the rotation of the rotation shaft body 121 is stopped. That is, the brake torque is generated.

Then, when the brake unit 13 is reversed, a predetermined oil pressure is again applied to the pressure chamber 147 by the hydraulic oil flowing-in from the oil path 132c, so that the piston 133 is raised against the elastic urging force of the coil spring 146. Then, as shown in Fig. 5(b), the bottom of the piston 133 is put into a separated state from the fixed plate 135. Simultaneously, the frictional plate 134 is raised via the spring collars 137 by the elastic urging force of the coil springs 138 so as to float over the fixed plate 135. In other words, the frictional plate 134 is moved and supported at a position between the piston 133 and the fixed plate 135 in a non-contact state with either of them.

The position of the frictional plate 134 at this time is determined by the balance between the elastic urging force of the coil springs 138, the weight of the frictional plate 134, and a fluid force of the lubricant oil. Since this structure need not set the position of the frictional plate 134 forcedly, the structure is very simplified without high-accuracy work.

Consequently, during canceling the brake, the frictional plate 134 does not touch the fixed plate 135 so that the frictional resistance is difficult to be generated or it cannot be generated. Since the frictional plate 134 is separated from the fixed plate 135, the shear resistance of the lubricant oil is reduced; when the frictional plate 134 is located at an intermediate position, the shear resistance of the lubricant oil is minimized. Hence, the energy loss is reduced, contributing to the energy saving which is an object of the hybrid excavator. When this structure is applied to a parking brake designed to have a small resistance to wear and a small thermal capacity of friction members, an especially remarkable effect can be expected.

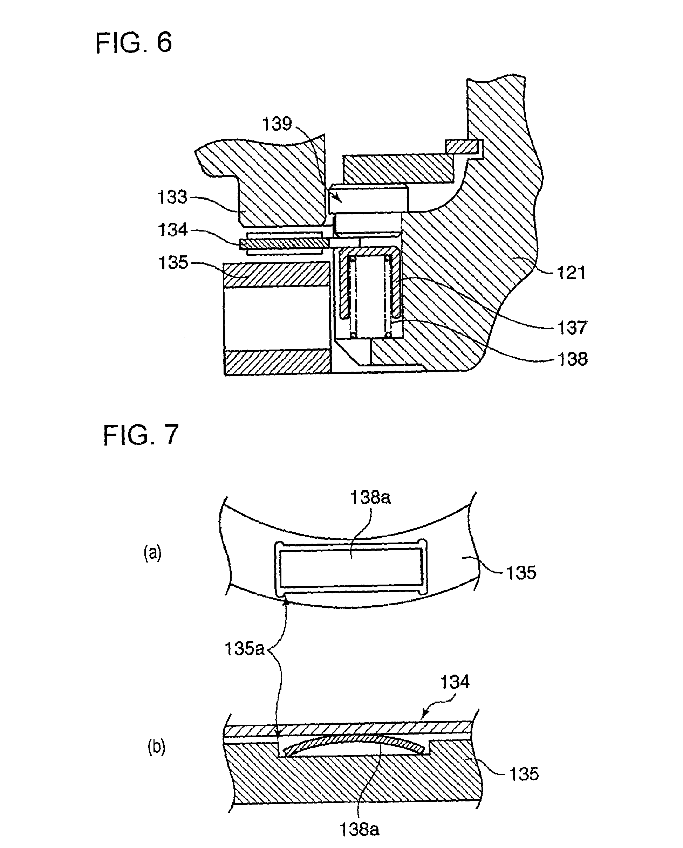

According to the embodiment, during canceling the brake, the upward displacement of the frictional plate 134 is not restricted in any way; alternatively, an upper stopper member may be provided for the restriction. As shown in a modification 1 of Fig. 6 for example, an upper stopper member 139 supported by the rotation shaft body 121 via a support member may be provided abuttably to the internal gear 134a. Thereby, the frictional plate 134 may be securely displaced to a position between the piston 133 and the fixed plate 135 in a non-contact state with either of them. In this case, although the work accuracy of the frictional plate 134 and so forth is required more than that in the case where the upper stopper member 139 is not provided as mentioned above, the frictional plate 134 can be set at a position where the frictional resistance is minimized, so that the energy saving is increased by that amount.

Also, according to the embodiment, the coil springs 138 are interposed between the rotation shaft body 121 and the frictional plate 134 in a state that the coil springs 138 are covered with the spring collars 137 at the tops of the coil springs 138, respectively; alternatively, the following structure may be adopted instead of this. That is, Fig. 7 shows a modification 2, in which Fig. 7(a) is a partial plan view of the fixed plate 135 and Fig. 7(b) is a longitudinal sectional view of the fixed plate 135. As shown in the modification 2 of Fig. 7, a shallow groove 135a is formed on the fixed plate 135, and a leaf spring 138a (corresponding to a spring member and friction member supporting means), which is downwardly curved toward both ends in the longitudinal direction from the center as an apex, may be mounted in the groove 135a. Even in this case, a lubricant oil film is interposed between the frictional plate 134 and the apex of the leaf spring 13 so that both the members cannot directly contact with each other.

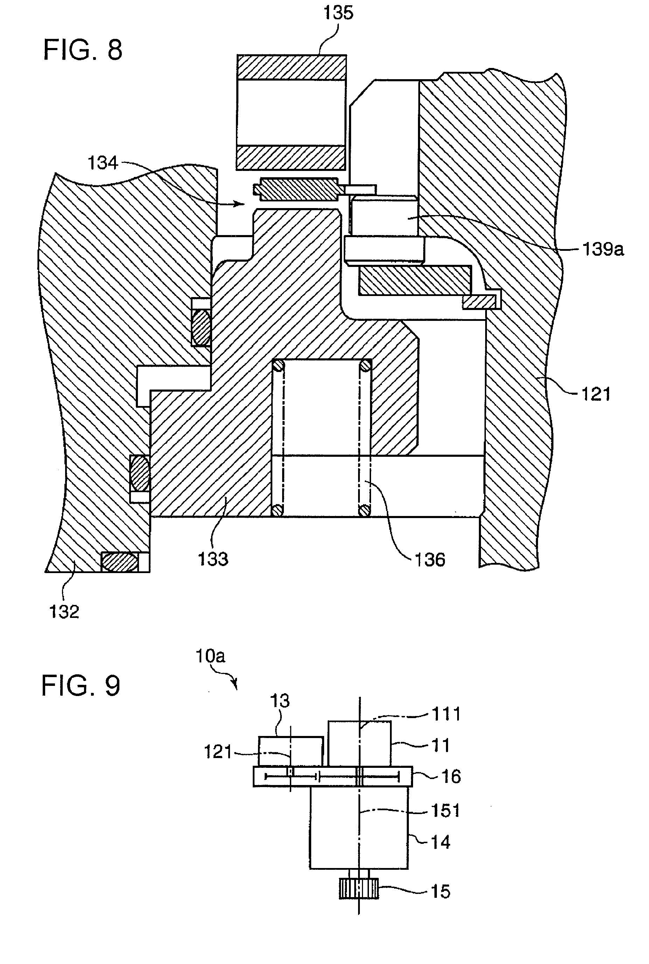

Also, according to the embodiment, the fixed plate 135 is arranged below the piston 133, and during canceling the brake, the frictional plate 134 is raised by the elastic urging force; in reverse, as shown in a modification 3 of Fig. 8, the fixed plate 135 may be arranged above the piston 133 so as to lower the frictional plate 134 by gravity during canceling the brake. At this time, the downward displacement of the frictional plate 134 may be restricted by a lower stopper member 139a (corresponding to stopper means) supported by the rotation shaft body 121. Thereby, the frictional plate 134 can also be securely supported at a position between the piston 133 and the fixed plate 135 in a non-contact state with either of them.

Also, according to the embodiment, the brake unit 13 is a negative actuation type, in which the brake is actuated when hydraulic oil is allowed to flow into the pressure chamber 147 in the lower side; alternatively, the brake unit 13 may be a positive actuation type, in which the brake is actuated when hydraulic oil is allowed to flow out of the pressure chamber 147 in the lower side.

Also, according to the embodiment, a wet disk brake has been described, in which the frictional plate 134 is immersed in lubricant oil; alternatively, when a small brake with a larger brake torque is required, a dry disk brake may be adopted. Even in this case, since the frictional plate does not touch the fixed plate during canceling the brake, the frictional resistance is reduced, contributing to energy saving.

Also, according to the embodiment, the respective frictional plate 134 and the fixed plate 135 have one plate; alternatively, a multiple disk brake may be adopted, in which the respective plates have a plurality of plates.

Also, according to the embodiment, as an actuation member, the hydraulic piston 133 is used; alternatively, the actuation member may be raised and lowered using an electromagnetic coil.

Also, according to the embodiment, the motor shaft 111 of the motor unit 11, the rotation shaft body 121 of the brake unit 13, and the input shaft 151 of the speed reduction unit 14 are coaxially connected together, so that the motor unit 11, the brake unit 13, and the speed reduction unit 14 are arranged in series, and the projection in the radial direction is eliminated, simplifying the structure to the utmost. The present invention is not limited to the embodiment in that the brake unit 13 is arranged between the motor unit 11 and the speed reduction unit 14. For example, the brake unit 13 may be arranged on the opposite side of the speed reduction unit 14 or may be arranged separated from the motor unit 11 and the speed reduction unit 14. In a rotating drive apparatus 10a according to such a modification (a modification 4), as shown in Fig. 9, a multiplying gear 16 is provided between the motor shaft 111 of the motor unit 11 and the input shaft 151 of the speed reduction unit 14 as a power divider for dividing power and transmitting the power, so that the rotation shaft body 121 of the brake unit 13 is connected to the motor shaft 111 of the motor unit 11 via the multiplying gear 16. Reference numeral 15 denotes a pinion attached to the output side of the speed reduction unit 14. The reason to use the multiplying gear 16 is that the torque of the brake unit 13 itself is further reduced. Since the brake unit 13 is arranged at a position separated from the motor unit 11 and the speed reduction unit 14 in this case, the dimension in the vertical direction is reduced, so that this arrangement is suitable for a case having a space limit in the vertical direction.

In the embodiments and modifications described above, the rotating drive apparatuses 10 and 10a for hybrid excavators have been exemplified; however, the present invention may also be applied to other vertical electrically driving devices with a brake. Furthermore, working machines other than the hybrid excavator, such as a hydraulic excavator and a crane, may also incorporate the invention. Industrial Applicability

As described above, the present invention is useful for a vertical electrically driving device with a brake and a working machine, and the invention is especially preferable for a rotating drive apparatus for a working machine such a hybrid excavator.

## Claims

1. A vertical electrically driving device with a brake comprising:
a motor unit including a motor shaft extending in a vertical direction;
a brake unit including a fixed member arranged around a rotation shaft, which extends in the vertical direction in drivingly associated with the motor shaft, in a non-contact state with the rotation shaft, an actuation member actionable in the vertical direction, and a friction member arranged between the actuation member and the fixed member rotatably together with the rotation shaft as well as slidably along the rotation shaft, the brake unit generating a brake torque by moving the actuation member toward the fixed member so as to press the friction member with the actuation member and the fixed member, and the brake unit canceling the braking by moving the actuation member in a direction opposite to the fixed member; and
a speed reduction unit including an input shaft extending in the vertical direction in drivingly associated with the motor shaft for reducing the rotational speed of the input shaft so as to output its rotational torque,
wherein the brake unit includes friction member supporting means for supporting the friction member during canceling the braking at a position between the actuation member and the fixed member in a non-contact state with either of the actuation member and the fixed member.

2. The device according to Claim 1, wherein the motor shaft of the motor unit, the rotation shaft of the brake unit, and the input shaft of the speed reduction unit are coaxially connected together.

3. The device according to Claim 1, further comprising a power divider arranged between the motor unit and the speed reduction unit for dividing the power of the motor unit into that of the speed reduction unit and that of the brake unit,
wherein the rotation shaft of the brake unit is connected to the motor shaft of the motor unit via the power divider.

4. The device according to any one of Claims 1 to 3, wherein the brake unit cancels the braking by raising the actuation member disposed above the fixed member, and
wherein the friction member supporting means raises the friction member so as to support it, when the actuation member is raised during canceling the braking, at a position between the actuation member and the fixed member in a non-contact state with either of them.

5. The device according to Claim 4, wherein the friction member supporting means includes a spring member mounted to the rotation shaft.

6. The device according to Claim 5, wherein the rotation shaft is provided with a guide groove formed on the external periphery for guiding the spring member.

7. The device according to Claim 6, wherein the friction member supporting means includes a cap arranged slidably in the guide groove, and the spring member is covered with the cap.

8. The device according to Claim 4, wherein the friction member supporting means includes a spring member mounted to the fixed member.

9. The device according to any one of Claims 4 to 8, wherein the brake unit includes an upper stopper member attached to the rotation shaft for restricting the upward displacement of the friction member.

10. The device according to any one of Claims 1 to 3, wherein the brake unit cancels the braking by lowering the actuation member disposed below the fixed member, and includes stopper means for supporting the friction member, which descends by gravity when the actuation member is lowered during canceling the braking, at a position between the actuation member and the fixed member in a non-contact state with either of them.

11. A working machine including an upper rotating body mounted rotatably about a vertical axis on a lower traveling body, the working machine comprising the vertical electrically driving device with a brake according to any one of Claims 1 to 10 as a drive source of a rotating drive apparatus for rotating the upper rotating body.
